# EUROPEAN PATENT SPECIFICATION

(11) **EP 2 914 065 B1**
(45) Date of publication and mention of the grant of the patent: **30.11.2016**
(21) Application number: 15156578.5
(22) Date of filing: 25.02.2015
(51) Int. Cl.: H05B 33/08

(54) **Illumination lamp and illumination apparatus**
Beleuchtungslampe und beleuchtungsvorrichtung
Lampe d'éclairage et appareil d'éclairage

(30) Priority: 26.02.2014 JP 2014035922; 31.03.2014 JP 2014074135
(43) Date of publication of application: 02.09.2015
(73) Proprietor: Ricoh Company, Ltd., Tokyo 143-8555 (JP)
(72) Inventor: Urano, Masaharu, Tokyo, 143-8555 (JP)
(74) Representative: Leeming, John Gerard

(56) References cited:
- EP-A2- 2 381 158
- US-A1- 2014 035 463

## Description

### BACKGROUND OF THE INVENTION

### 1. Field of the Invention

The present invention generally relates to an illumination lamp and an illumination apparatus.

### 2. Description of the Related Art

In recent years, illumination lamps with a light emitting diode (LED) (hereinafter also referred to as LED illumination lamps), which are characterized by their low power consumption, long service life, and the like, have been attracting attention. One of those illumination lamps is an LED illumination lamp which uses an output of a fluorescent inverter ballast for its input, which can be used replacing a conventional fluorescent lamp.

There are some fluorescent inverter ballasts which may apply, at the startup, a voltage lower than an ordinary operation voltage between the terminals of a fluorescent lamp. When an LED illumination lamp is attached to this kind of fluorescent inverter ballast, replacing a conventional fluorescent lamp, an unstable illumination problem occurs, including an illumination failure, a flickering, and the like.

It is considered to be a cause of the problem that, in the case of a conventional fluorescent lamp, a current does not flow with a low voltage at the startup, while, in the case of an LED illumination lamp, a current may flow even with the low voltage at the startup and the fluorescent inverter ballast may operate differently compared to the case where the conventional fluorescent lamp is normally connected to the fluorescent inverter ballast. Therefore, in order to connect an LED illumination lamp to a fluorescent inverter ballast, the above problem needs to be resolved.

US 2014/0035463 A1 discloses an LED lamp comprising a rectifier circuit unit, a plurality of resistors, a Zener diode and a resistor in series between a high-voltage-side output terminal and a ground-side output terminal.

It is a general object of the present invention to obviate the above problem and provide stable illumination when an illumination lamp with a light emitting diode is connected to a fluorescent inverter ballast.

### SUMMARY OF THE INVENTION

According to the present invention there is provided an illumination lamp and illumination apparatus as specified in the claims.

According to the disclosed invention, stable illumination can be provided when an illumination lamp with a light emitting diode is connected to a fluorescent inverter ballast.
[Patent Document 1] Japan Patent No. 5108994

### BRIEF DESCRIPTION OF THE DRAWINGS

FIG. 1 is a perspective view illustrating an appearance of an illumination apparatus according to a first embodiment.
FIG. 2 is a drawing illustrating circuit blocks of an illumination lamp according to the first embodiment.
FIG. 3 is a drawing illustrating circuit blocks of an illumination lamp according to a modified example 1 of the first embodiment.
FIG. 4 is a drawing illustrating circuit blocks of an illumination lamp according to a modified example 2 of the first embodiment.
FIG. 5 is a drawing illustrating circuit blocks of an illumination lamp according to a modified example 3 of the first embodiment.
FIG. 6 is a drawing illustrating circuit blocks of an illumination lamp according to a modified example 4 of the first embodiment.
FIG. 7 is a drawing illustrating a wire connection of major circuits of an illumination lamp according to a first example.
FIG. 8 is a drawing illustrating a wire connection of major circuits of an illumination lamp according to a second example.
FIG. 9 is a drawing illustrating a wire connection of major circuits of an illumination lamp according to a first embodiment.
FIG. 10 is a drawing illustrating circuit blocks of an illumination lamp according to a modified example 5 of the first embodiment.

### DESCRIPTION OF THE PREFERRED EMBODIMENTS

In the following, embodiments of the present invention will be described referring to the drawings. In each of the drawings, the same numeral is assigned to the same configuration element and a duplicated description may be omitted.

### <First embodiment>

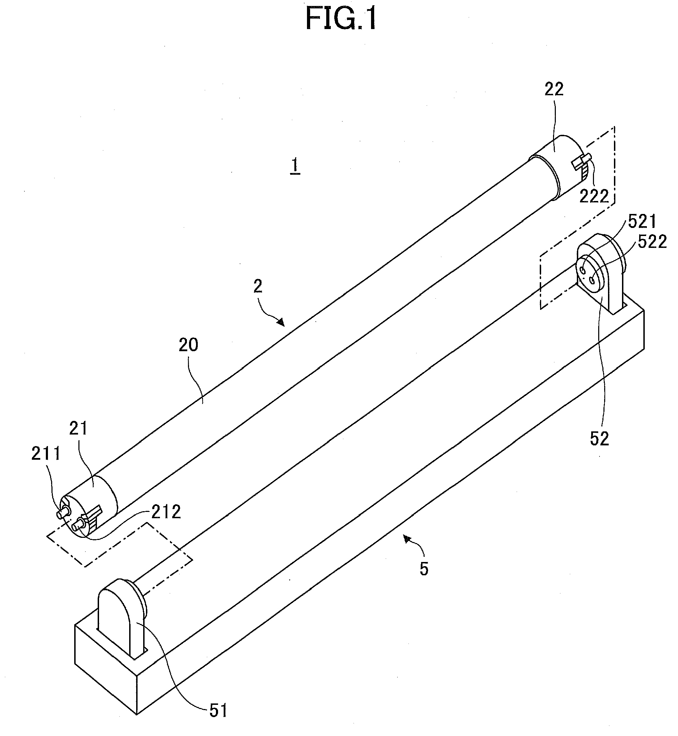

FIG. 1 is a perspective view illustrating an appearance of an illumination apparatus 1 according to a first embodiment. Referring to FIG. 1, the illumination apparatus 1 includes an illumination lamp 2 and an illumination fixture 5 which removably connects the illumination lamp 2.

The illumination lamp 2 includes a translucent unit 20 and mouthpieces 21 and 22. The translucent unit 20 includes a member made of light-transmissive resin or glass through which light emitted from an embedded light source (an LED module 27 which will be described later) is transmitted, which member is sealed by the mouthpiece 21 disposed at one end and the mouthpiece 22 disposed at the other end. The translucent unit 20 may be, for example, straight tubular.

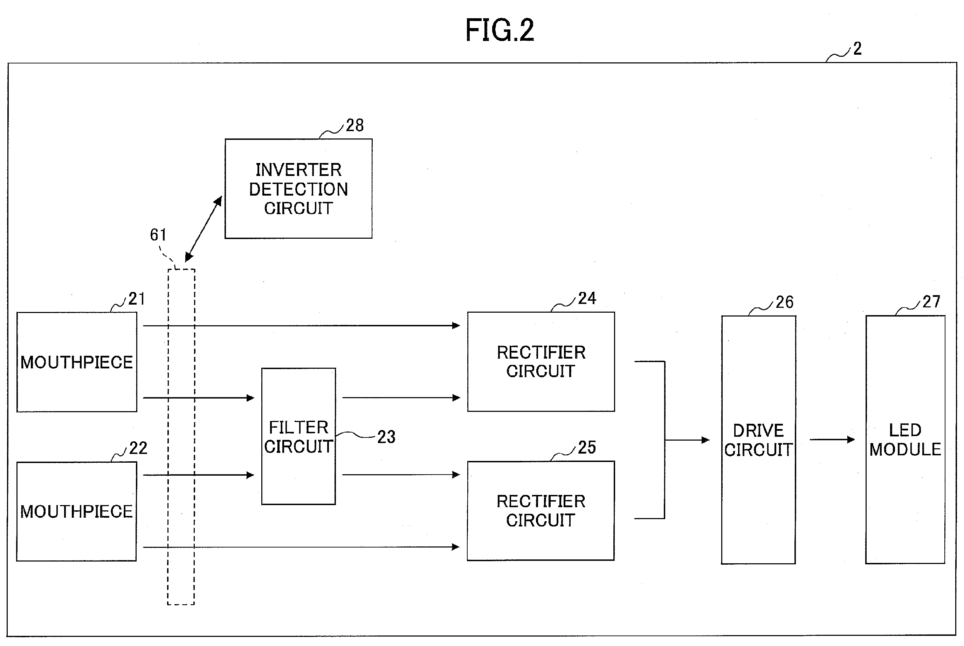

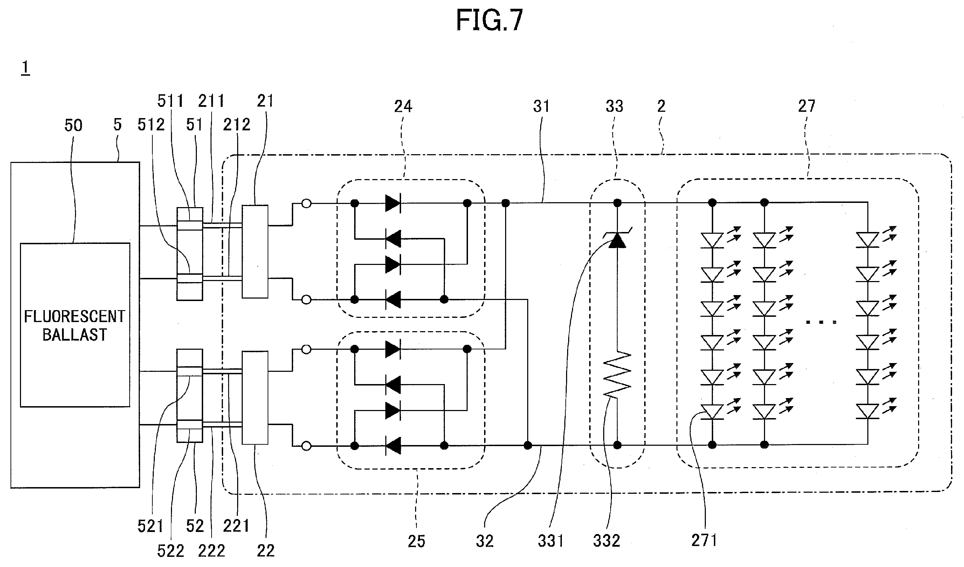

The mouthpiece 21 includes convex terminals 211 and 212. Similarly, the mouthpiece 22 includes convex terminals 221 and 222. Some of the terminals, however, are not shown in FIG. 1 (refer to FIG. 7 which will be described later). It should be noted that an electric circuit is disposed in the translucent unit 20 (refer to FIG. 2 which will be described later).

The illumination fixture 5 includes a fluorescent ballast 50 (refer to FIG. 7) and sockets 51 and 52 to which the illumination lamp 2 can be removably attached, and is configured to be connectable to commercial AC power. The commercial AC power frequency is, for example, 50 Hz or 60 Hz. The commercial AC power is supplied to the fluorescent ballast 50.

The fluorescent ballast 50 may be, for example, a well-known fluorescent glow ballast, a fluorescent rapid ballast, a fluorescent inverter ballast, or the like. The illumination lamp 2 may be, however, configured to be directly connectable to the commercial AC power, and, in that case, the fluorescent ballast 50 is not needed. In this way, the illumination lamp 2 may be configured to be connectable to any one of the fluorescent glow ballast, the fluorescent rapid ballast, the fluorescent inverter ballast and the commercial AC power.

The socket 51 includes concave terminals 511 and 512. Similarly, the socket 52 includes concave terminals 521 and 522. Some of the terminals, however, are not shown in FIG. 1 (refer to FIG. 7 which will be described later).

The terminals 211 and 212 of the mouthpiece 21 of the illumination lamp 2 are inserted into, engaged with, and electrically connected to the terminals 511 and 512 of the socket 51 of the illumination fixture 5. Similarly, the terminals 221 and 222 of the mouthpiece 22 of the illumination lamp 2 are inserted into, engaged with, and electrically connected to the terminals 521 and 522 of the socket 52 of the illumination fixture 5.

In this way, the shape of the illumination lamp 2 is similar to a straight tubular fluorescent lamp and is easily exchangeable with an existing fluorescent lamp attached to the illumination fixture 5. The shape of the illumination lamp 2, however, may not be necessarily similar to the existing fluorescent lamp. For example, the cross-sectional shape of the translucent unit 20 may not be circular and may be semicircular, or the like.

FIG. 2 is a drawing illustrating circuit blocks of an illumination lamp according to the first embodiment. Referring to FIG. 2, the illumination lamp 2 includes as major units the mouthpieces 21 and 22, a filter circuit 23, rectifier circuits 24 and 25, a drive circuit 26, an LED module 27 and an inverter detection circuit 28.

The filter circuit 23 is an EMI countermeasure filter which is a circuit for reducing electromagnetic noise emitted around by the illumination lamp 2. The filter circuit 23 may be a circuit in which, for example, an inter-line capacitor (X-capacitor), a versus-ground capacitor (Y-capacitor), a common mode coil, a normal mode coil, and the like, are connected in series or in parallel (not shown). The illumination lamp 2 becomes capable of reducing electromagnetic noise by including the filter circuit 23, and satisfies the EMI (Electro-Magnetic Interference) standards.

It should be noted that the filter circuit 23 is configured to be by-passed using a switching circuit 61. The switching circuit 61 may be configured to comprise, for example, a relay or a semiconductor switch (e.g., FET).

The rectifier circuits 24 and 25 are circuits for rectifying AC voltages supplied via the filter circuit 23 from the mouthpieces 21 and 22 as input units, and supplying the rectified voltages to the LED module 27 via the drive circuit 26.

The drive circuit 26 is a circuit for driving the LED module 27 which includes a plurality of light emitting diodes. The drive circuit 26 may be configured to include, for example, a buck-boost circuit, a constant current circuit, or the like. By including the drive circuit 26, it becomes possible for the illumination lamp 2 to supply appropriate current not exceeding the rated current to the LED module 27 even when the voltages supplied from the rectifier circuits 24 and 25 may vary, thereby a failure of the LED module 27 can be avoided and power saving can be achieved.

The illumination lamp 2 is configured to be connectable to any one of the fluorescent glow ballast, the fluorescent rapid ballast, the fluorescent inverter ballast and the commercial AC power and capable of selecting circuits for use depending on the connected target. The inverter detection circuit 28 is a circuit for detecting a type of the power supply unit connected to the input unit of the illumination lamp 2.

The inverter detection circuit 28 is a circuit for detecting whether or not the fluorescent ballast 50 included in the illumination fixture 5 is a fluorescent inverter ballast when the illumination lamp 2 is connected to the illumination fixture 5 and powered. In the case where the fluorescent ballast 50 is a fluorescent inverter ballast, the frequency of a signal input to the illumination lamp 2 from the fluorescent ballast 50 is a high frequency on the order of several tens KHz.

On the other hand, in the case where the fluorescent ballast 50 is any one of the fluorescent glow ballast, the fluorescent rapid ballast, and the commercial AC power, the frequency of a signal input from the fluorescent ballast 50 (or directly from the commercial AC power) to the illumination lamp 2 is a low frequency on the order of 50 to 60 Hz. Therefore, the inverter detection circuit 28 can detect whether or not the fluorescent ballast 50 included in the illumination fixture 2 is an fluorescent inverter ballast based on, for example, the frequency of a signal input to the illumination lamp 2.

In the case where the inverter detection circuit 28 detects that the fluorescent ballast 50 included in the illumination fixture 5 is a fluorescent inverter ballast, the filter circuit 23 is by-passed by the switching circuit 61.

That is, in the case where the inverter detection circuit 28 detects that the fluorescent ballast 50 included in the illumination fixture 5 is a fluorescent inverter ballast, the signal input to the illumination lamp 2 from the fluorescent inverter ballast via the mouthpieces 21 and 22 is, by by-passing the filter circuit 23, supplied to the rectifier circuits 24 and 25. Then, the outputs of the rectifier circuits 24 and 25 are supplied to the LED module 27 via the drive circuit 26.

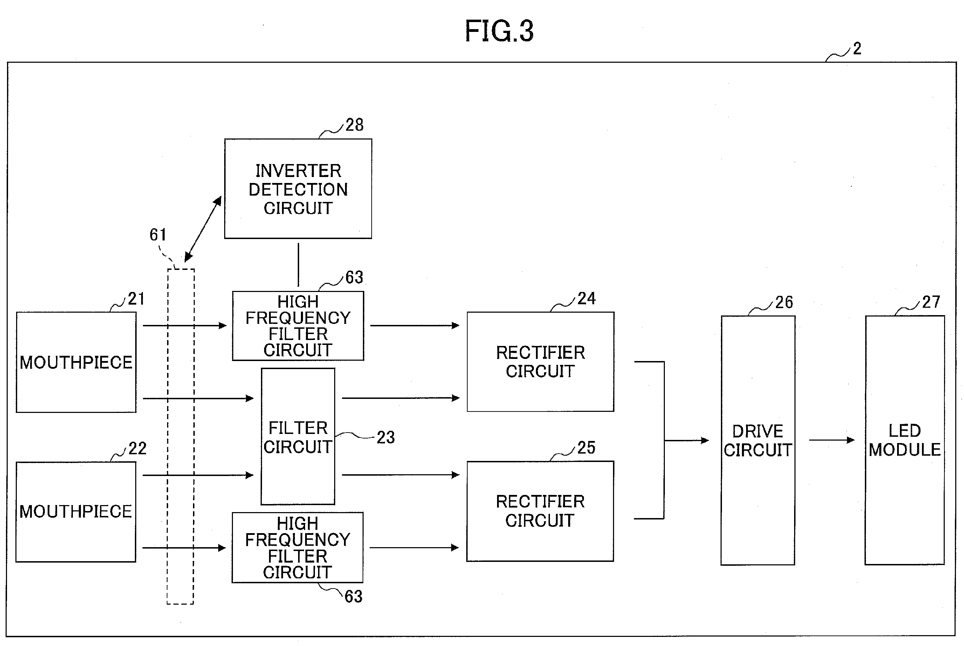

Also, as shown in FIG. 3, high frequency filter circuits 63 may be disposed separately from the filter circuit 23, and in the case where the inverter detection circuit 28 detects that the fluorescent ballast 50 included in the illumination fixture 5 is a fluorescent inverter ballast, the outputs of the mouthpieces 21 and 22 may, by using the switching circuit 61, pass through the high frequency filter circuits 63. As a result, even if the filter circuit 23 is by-passed, an EMI noise problem does not occur and it becomes possible to provide appropriate current not exceeding the rated current to the LED module 27. Also, there may be a case where the fluorescent ballast 50 includes a function corresponding to the filter circuits.

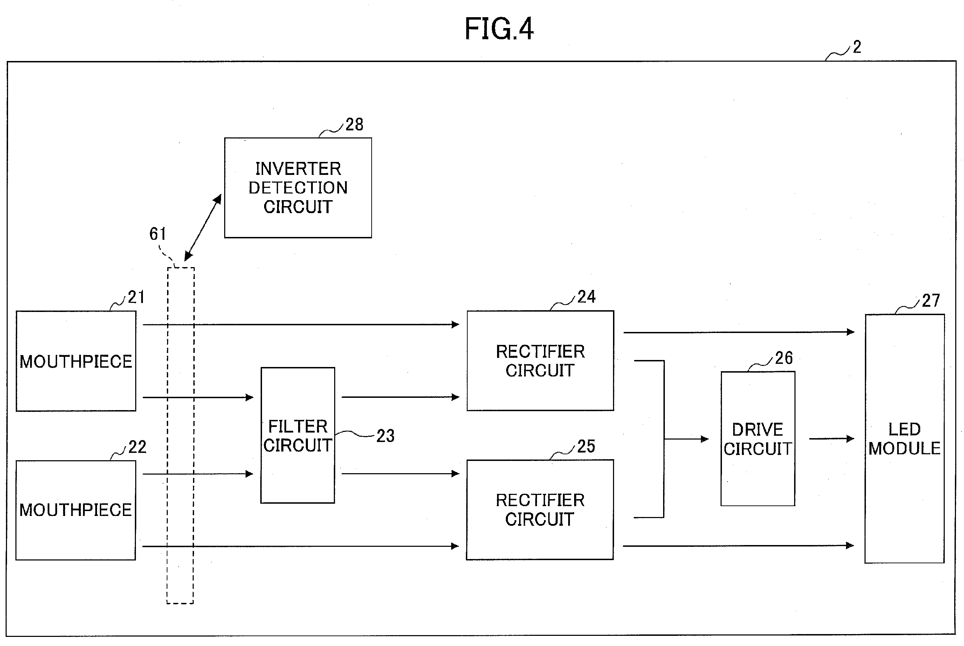

Furthermore, as shown in FIG. 4, the drive circuit 26 may be capable of being by-passed by a switching circuit (not shown). The switching circuit may be configured to include, for example, a relay or a semiconductor switch (e.g., FET). In the case where the filter circuit 23 is by-passed by using the switching circuit 61, the outputs of the rectifier circuits 24 and 25 are, by by-passing the drive circuit 26, supplied to the LED module 27. It should be noted that even in the illumination lamp 2 in FIG. 4, in the case where the inverter detection circuit 28 detects that the fluorescent ballast 50 included in the illumination fixture 5 is a fluorescent inverter ballast, the outputs of the mouthpieces 21 and 22 may, by using the switching circuit 61, pass through the high frequency filter circuits 63.

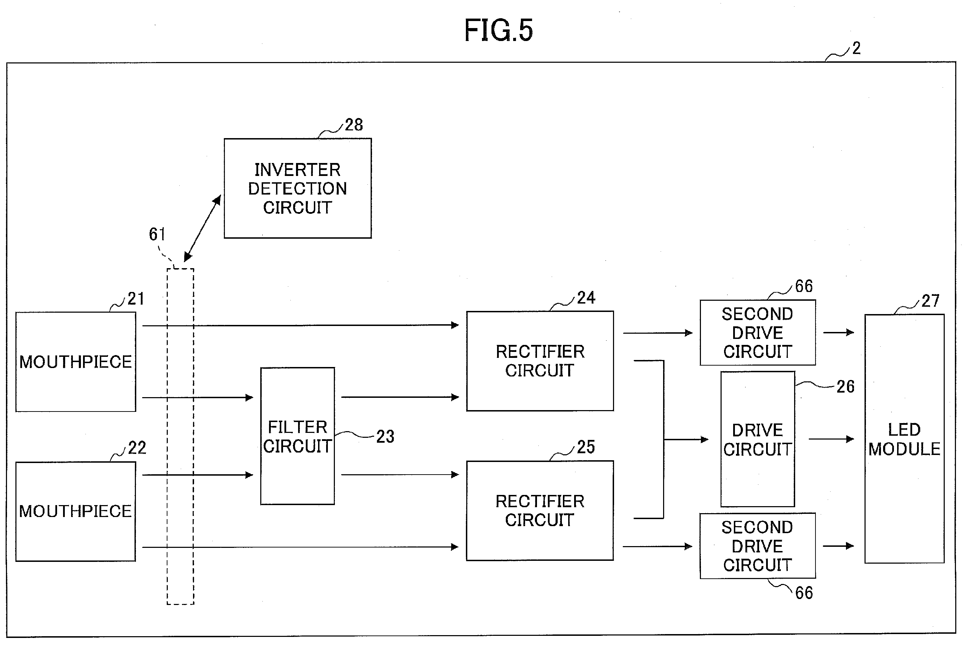

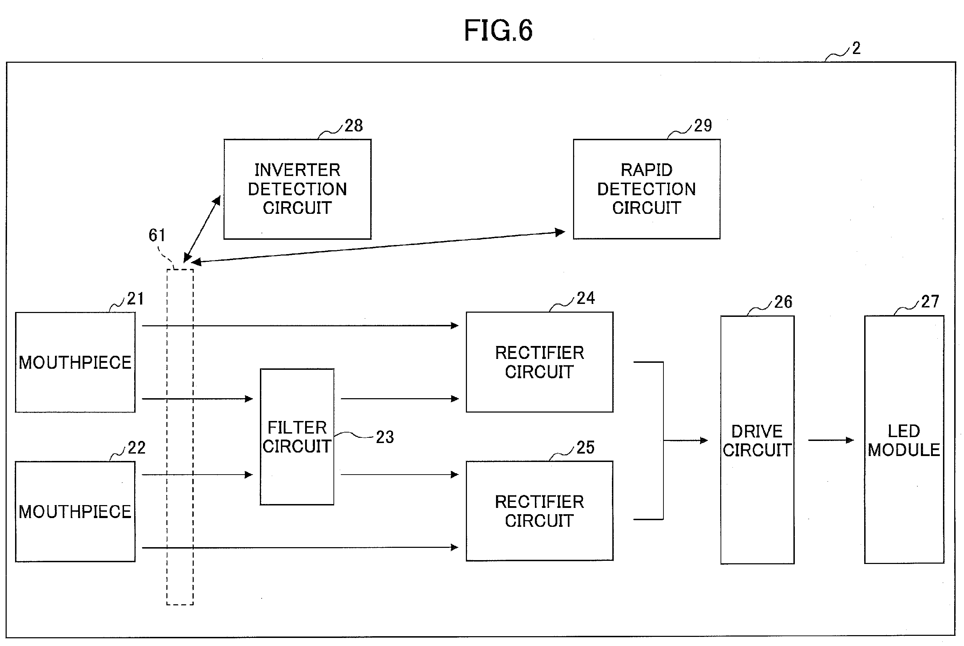

Furthermore, as shown in FIG. 5, second drive circuits 66 may be disposed separately from the drive circuit 26. Furthermore, as shown in FIG. 6, the illumination lamp 2 may be configured to include a rapid detection circuit 29. The rapid detection circuit 29 is a circuit for detecting whether or not the fluorescent ballast 50 included in the illumination fixture 5 is a fluorescent rapid ballast when the illumination lamp 2 is connected to the illumination fixture 5 and powered.

For example, in the case where the rapid detection circuit 29 detects that the fluorescent ballast 50 included in the illumination fixture 5 is a fluorescent rapid ballast, the filter circuit 23 and the drive circuit 26 may not be by-passed, but the specification of the drive circuit 26 may be changed.

It should be noted that in the case where the inverter detection circuit 28 does not detect that the fluorescent ballast 50 is a fluorescent inverter ballast and the rapid detection circuit 29 does not detect that the fluorescent ballast 50 is a fluorescent rapid ballast, it is determined that the fluorescent ballast 50 is a fluorescent glow ballast or the illumination lamp 2 is, not through the fluorescent ballast 50, directly connected to the commercial AC power, and the signals input to the illumination lamp 2 through the mouthpieces 21 and 22 are supplied to the rectifier circuits 24 and 25 via the filter circuit 23. Then, the outputs of the rectifier circuits 24 and 25 are supplied to the LED module 27 via the drive circuit 26. Also, regarding the specification of the drive circuit 26, a specification which fits the fluorescent glow ballast and the commercial AC power is selected.

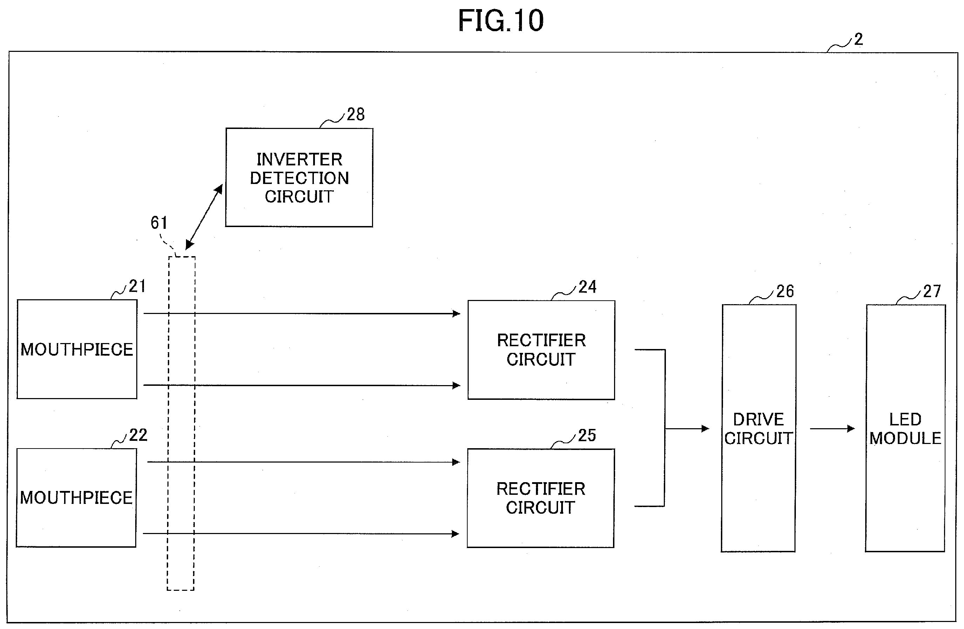

Furthermore, as shown in FIG. 10, the filter circuit 23 and the high frequency filter circuits 63 may not be included.

Referring to FIGs. 2 through 6 and FIG. 10, an outline of overall operations of the circuit blocks included in the illumination lamp 2 have been described above. Next, referring to FIG. 7, characteristic operations of the illumination lamp 2 will be described. It should be noted that, in FIG. 7, wire connections only for the major circuits of the illumination lamp 2 according to the first example are shown and an illustration of wire connections for portions not related to the characteristic operations is omitted.

In FIG. 7, the terminals 211 and 212 of the mouthpiece 21 of the illumination lamp 2 are inserted into, engaged with, and electrically connected to the respective terminals 511 and 512 of the socket 51 of the illumination fixture 5. Similarly, the terminals 221 and 222 of the mouthpiece 22 of the illumination lamp 2 are inserted into, engaged with, and electrically connected to the respective terminals 521 and 522 of the socket 52 of the illumination fixture 5.

The rectifier circuits 24 and 25 rectify the AC voltages which are input, through the filter circuit 23 (not shown in FIG. 7) or directly without going through the filter circuit 23, from the mouthpieces 21 and 22. The rectifier circuits 24 and 25 are, for example, bridge type full-wave rectifier circuits configured to include a so-called fast recovery diode whose reverse recovery time is short.

The rectified voltage rectified by the rectifier circuits 24 and 25 is, through the plus side wire connection 31 and the minus side wire connection 32 which are output units of the rectifier circuits 24 and 25, and through both ends of the voltage detection 33 and the drive circuit 26 (not shown in FIG. 7) disposed in the subsequent stage of the voltage detection circuit 33, supplied to both ends of the LED module 27.

The LED module 27 includes a plurality of serial connection units in each which a plurality of light emitting diodes 271 are connected in series between the plus side wire connection 31 and the minus side wire connection 32 (6 light emitting diodes 271 are connected in series in FIG. 7). And the serial connection units are connected in parallel. When a voltage between the plus side wire connection 31 and the minus side wire connection 32 exceeds a sum of forward voltages of the light emitting diodes 271 connected in series and included in the serial connection units, a current flows through each of the light emitting diodes causing them to emit light.

As mentioned above, some fluorescent inverter ballasts may apply a voltage lower than an ordinary operation voltage between the terminals of the fluorescent lamp at the startup. Therefore, even in the case where the illumination lamp 2 is attached to the fluorescent inverter ballast, it is necessary to cause the illumination lamp 2 to behave in the same way as in the case where a normal fluorescent lamp is attached to the fluorescent inverter ballast. The reason for the necessity of behaving in the same way is that if it behaves differently, then the fluorescent inverter ballast might operate differently compared to the case where the normal fluorescent lamp is attached to the fluorescent inverter ballast, causing an illumination failure, a flickering, or the like, and leading to unstable illumination.

However, in the case of an illumination lamp which has light emitting diodes, there may be a case in which a circuit is disposed between the plus side wire connection 31 and the minus side wire connection 32, which circuit generates a predetermined voltage by using a discharge resistor or a resistor divider, and supplies the power to ICs or the like. In such a case, if no measures are taken, due to the low voltage applied by the fluorescent inverter ballast at the startup, a current ends up flowing through the discharge resistor, or the like (that is, the illumination lamp behaves differently compared to the case where a normal fluorescent lamp is attached to the fluorescent inverter ballast). As a result, there might be a chance that the illumination lamp which has light emitting diodes does not provide stable illumination.

Therefore, in the illumination lamp 2, in order to generate the same behavior as the fluorescent lamp at the startup (that is, in order to cause the current not to flow at the startup), the voltage detection circuit 33 is disposed.

The voltage detection circuit 33 is a circuit configured to cause a current not to flow from the fluorescent inverter ballast side to the side of the rectifier circuits 24 and 25 when a voltage applied by the fluorescent inverter ballast is less than a predetermined voltage, and cause the current to flow from the fluorescent inverter ballast side to the side of the rectifier circuits 24 and 25 when the voltage is equal to or greater than the predetermined voltage. The voltage detection circuit 33 may be configured to be, for example, a circuit in which a discharge resistor or the like and a zener diode are connected in series.

In FIG. 7, an example case is shown in which a resistor 332 for discharging, or the like is disposed in the output side of the rectifier circuits 24 and 25, and the resistor 332 and the zener diode 331 are connected in series, forming the voltage detection circuit 33. Specifically, a cathode side of the zener diode 331 is connected to the plus side wire connection 31. Also, an anode side of the zener diode 331 is connected to one end of the resistor 332, and the other end of the resistor 332 is connected to the minus side wire connection 32.

In the case where the fluorescent ballast 50 is a fluorescent inverter ballast, in steady state, a high frequency voltage on the order of several tens KHz (corresponding to a direct-current voltage on the order of 100 V) is applied from the mouthpieces 21 and 22; however, at the startup, a low voltage (e.g., about 5 to 10 V) may be applied. Therefore, a zener voltage of the zener diode 331 of the voltage detection circuit 33 is set greater than the low voltage (e.g., about 5 to 10 V) applied by the fluorescent inverter ballast at the startup and less than the high voltage (e.g., 100 V) applied in the steady state. The zener voltage is configured to be, for example, about 30 V. It should be noted that it is possible to make the predefined voltage (zener voltage) changeable by changing the zener voltage of the zener diode 331, and, for example, even in a preheating state (about several tens V) which corresponds to between the steady state and the startup, it is possible to cause the current not to flow to the side of the rectifier circuits 24 and 25.

In this way, in the voltage detection circuit 33, the current does not flow when the voltage applied by the fluorescent inverter ballast is less than the predetermined voltage (zener voltage), and the current flows when the voltage becomes equal to or greater than the predetermined voltage (zener voltage). In other words, when the voltage applied by the fluorescent inverter ballast is less than the predetermined voltage, the current does not flow from the fluorescent inverter ballast to the side of the rectifier circuits 24 and 25 and the behavior is the same as the case where a fluorescent lamp is normally attached to the fluorescent inverter ballast.

In this way, an operation by the fluorescent inverter ballast different from the case where a fluorescent lamp is normally attached to it can be avoided. As a result, a problem of unstable illumination including occurrence of an illumination failure, a flickering of the illumination lamp 2, or the like can be resolved.

Afterward, the fluorescent inverter ballast transitions to a steady state operation. In the steady state, because the voltage greater than the zener voltage of the zener diode 331 is applied from the fluorescent inverter ballast, the current flows through the zener diode 331 and the resistor 332, and the resistor 332 can fulfill its original function (e.g., discharging). It should be noted that in the case where there are multiple locations in which the current flows due to the low voltage at the startup, only circuits similar to the voltage detection circuit 33 are needed to be disposed in the multiple locations.

It should be noted that the voltage detection circuit 33 may be disposed in the side of the drive circuit 26. In this case, when the inverter detection circuit 28 detects that the fluorescent ballast 50 is a fluorescent inverter ballast, the voltage detection circuit 33 is by-passed together with the drive circuit 26. However, it can happen that, with the low voltage applied at the startup, the inverter detection circuit 28 may be unable to detect the fluorescent inverter ballast and the switching circuit 61 may be switched to the side where the voltage detection 33 and the drive circuit 26 are not by-passed.

In this case, too, by disposing the voltage detection circuit 33, it is possible to cause the current not to flow through the illumination lamp 2 at the startup. Afterward, when the fluorescent inverter ballast transitions to a steady state operation, the inverter detection circuit 28 detects the fluorescent inverter ballast, and the voltage detection circuit 33 and the drive circuit 26 are by-passed together by the switching circuit 61. That is, the voltage detection circuit 33 is not involved in the steady state operation.

However, in the case where the illumination lamp 2 is connected to other than the fluorescent inverter ballast, the voltage detection circuit 33 and the drive circuit 26 are not by-passed. In this case, because the voltage equal to or greater than the zener voltage of the zener diode 331 is applied to the illumination lamp 2, the current flows in the zener diode 331 and the resistor 332, and the resistor 332 can fulfill its original function (e.g., discharging).

As described above, in the illumination lamp 2 according to the first example, by disposing the voltage detection circuit 33, it becomes possible to avoid occurrence of malfunction (illumination failure, flickering, or the like) in the case where a low voltage is applied by the fluorescent inverter ballast at the startup. In this way, the LED module 27 becomes capable of providing stable illumination.

### <Second example>

In the second example, another configuration example of the voltage detection circuit is shown. It should be noted that, in the second example, the description for the same configuration which has already been described in the previous example may be omitted.

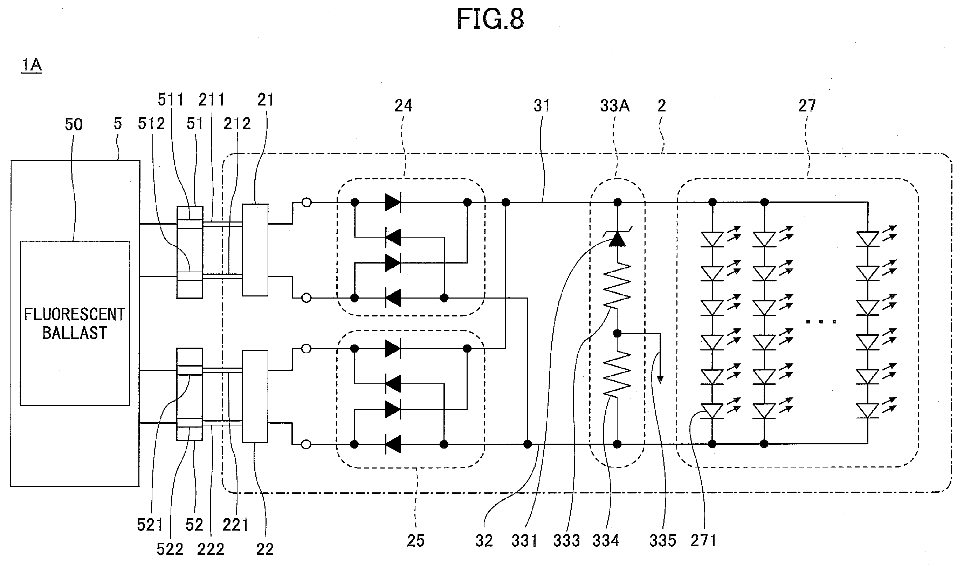

FIG. 8 is a drawing illustrating a wire connection of major circuits of an illumination lamp 2 according to the second example. Referring to FIG. 8, in an illumination apparatus 1A, a voltage detection circuit 33A is included in the illumination lamp 2. The voltage detection circuit 33A is a circuit configured to cause a current not to flow from the fluorescent inverter ballast side to the side of the rectifier circuits 24 and 25 when a voltage applied by the fluorescent inverter ballast is less than a predetermined voltage, and cause the current to flow from the fluorescent inverter ballast side to the side of the rectifier circuits 24 and 25 when the voltage is equal to or greater than the predetermined voltage.

The voltage detection circuit 33A may be configured to include a zener diode 331, a resistor 333 and a resistor 334 connected in series. In an example in FIG. 8, a cathode side of the zener diode 331 is connected to the plus side wire connection 31. Also, an anode side of the zener diode 331 is connected to one end of the resistor 333, and the other end of the resistor 333 is connected to one end of the resistor 334. Also, the other end of the resistor 334 is connected to the minus side wire connection 32.

The resistor 333 and the resistor 334 form a voltage dividing circuit, divide the voltage of the anode side of the zener diode 331, and are capable of extracting a predetermined voltage from the connection unit 335 of the resistor 333 and the resistor 334. The predetermined voltage may be determined arbitrarily by the ratio between the resistor 333 and the resistor 334.

For example, by connecting the connection unit 335 to an IC, a transistor, or the like, it can be used as a power supply for the IC, the transistor, or the like. A capacitor may be disposed in parallel with the resistor 334 as needed in order to stabilize the predetermined voltage. Also, more resistors may be connected in series to the zener diode 331 in order to extract multiple different voltages.

As described above, the voltage detection circuit may be configured by further connecting the zener diode in series to the voltage dividing circuit in which multiple resistors are connected in series.

### <First embodiment>

In the first embodiment, another configuration example of the voltage detection circuit is shown. It should be noted that, in the first embodiment, the description for the same configuration already described in the previous examples may be omitted.

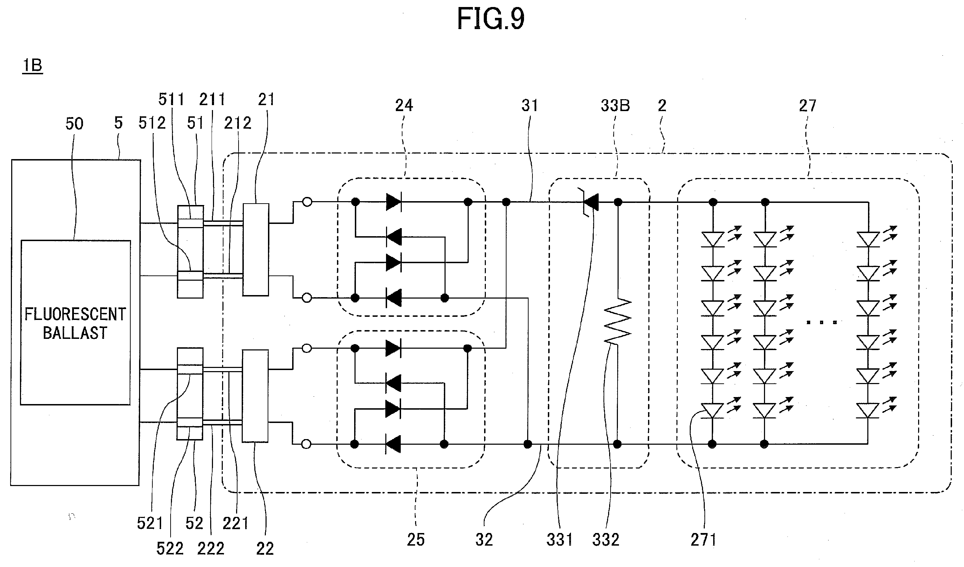

FIG. 9 is a drawing illustrating a wire connection of major circuits of an illumination lamp 2 according to the first embodiment. Referring to FIG. 9, in an illumination apparatus 1B, a voltage detection circuit 33B is included in the illumination lamp 2. The voltage detection circuit 33B is a circuit configured to cause a current not to flow from the fluorescent inverter ballast side to the side of the rectifier circuits 24 and 25 when a voltage applied by the fluorescent inverter ballast is less than a predetermined voltage, and cause the current to flow from the fluorescent inverter ballast side to the side of the rectifier circuits 24 and 25 when the voltage is equal to or greater than the predetermined voltage.

The voltage detection circuit 33B is the same as the voltage detection circuit 33 (refer to FIG. 7) in terms of consisting of the zener diode 331 and the resistor 332. However, the voltage detection circuit 33B is different from the voltage detection circuit 33 in terms of having the cathode of the zener diode 331 facing the side of the rectifier circuits 24 and 25, and having been inserted to the plus side wire connection 31.

The anode of the zener diode 331 is connected to one end of the resistor 332, and the other end of the resistor 332 is connected to the minus side wire connection 32. The connection unit of the anode of the zener diode 331 and one end of the resistor 332 are connected to the LED module 27. Alternatively, the connection unit of the anode of the zener diode 331 and one end of the resistor 332 may be connected to the LED module 27 through the drive circuit 26 (not shown in FIG. 9).

As described above, the zener diode 331 may be inserted to the plus side wire connection 31, that is, a stage further preceding the discharging resistor 332 (of the mouthpieces side). In this case, however, because the current flows through the zener diode 331 even in the steady state creating the voltage drop, compared to the voltage detection circuits 33 and 33A according to the first example and the second example, respectively there is some power loss.

It should be noted that, as shown in the second example, instead of the resistor 332, multiple resistors forming a voltage dividing circuit may be disposed.

Although preferred embodiments and modified examples thereof have been described in detail, the present invention is not limited to the above embodiments and modified examples, and various modifications and replacements may be applied to the above embodiments and modified examples without departing from the scope of the present invention.

For example, in the above embodiments, as an example of the illumination lamp, an illumination lamp is shown, which is connectable to any one of the fluorescent glow ballast, the fluorescent rapid ballast, the fluorescent inverter ballast and the commercial AC power. However, the present invention can be applied to an illumination lamp with a DC impedance element, which illumination lamp is connectable to at least a fluorescent inverter ballast. In other words, the present invention can be applied to both the illumination lamp with the DC impedance element which is connectable to only the fluorescent inverter ballast and the illumination lamp which is connectable not only to the fluorescent inverter ballast but also to the other fluorescent ballasts or the commercial AC power.

Also, the DC impedance element may be a resistor as long as it can allow a steady current flow when a DC voltage is applied to its ends, and may be, for example, an inductor, a thermistor, or a combination of an inductor or thermistor and a resistor. Also, instead of the DC impedance element, the DC impedance inside the IC may be used.

Also, in the case of the illumination lamp connectable to only a fluorescent inverter ballast, only the necessary units in the circuit blocks shown in FIGs. 2 through 6 and FIG. 10 may be included. For example, the inverter detection circuit, the rapid detection circuit, the filter circuit, the drive circuit or the like, may not be included.

## Claims

1. An illumination lamp (2) adapted to be connected to an inverter ballast for a fluorescent lamp, the illumination lamp comprising:
a light emitting diode (271);
a rectifier circuit (24, 25) configured to rectify an AC voltage supplied by the inverter ballast for a fluorescent lamp and supply the rectified voltage to the light emitting diode (271); and
a voltage detection circuit (33B) configured to cause a current not to flow from the inverter ballast for a fluorescent lamp to the rectifier circuit (24, 25) when a voltage applied by the inverter ballast for a fluorescent lamp is less than a predetermined voltage, and cause the current to flow from the inverter ballast for a fluorescent lamp to the rectifier circuit (24, 25) when the voltage becomes equal to or greater than the predetermined voltage;
wherein the voltage detection circuit (33B) includes a DC impedance element (332) and a Zener diode (331) connected in series to the DC impedance element(332); and
wherein the rectifier circuit (24, 25) outputs the rectified voltage to a plus side wire connection and a minus side wire connection,
**characterised in that** the Zener diode (331), a cathode of which is facing the rectifier circuit (24, 25), is inserted into the plus side wire connection, and
the DC impedance element (332) is connected between an anode of the Zener diode (331) and the minus side wire connection.

2. The illumination lamp (2) according to claim 1, wherein a plurality of the DC impedance elements (333, 334) are connected in series, thereby dividing a voltage of the anode of the Zener diode (331).

3. An illumination apparatus (1) comprising: the illumination lamp (2) according to any one of claims 1 through 2; and
an illumination fixture (5) to which the illumination lamp (2) is attached.

## Patentansprüche

1. Beleuchtungslampe (2), die ausgelegt ist, mit einer Wechselrichterdrossel für eine Leuchtstofflampe verbunden zu sein,
wobei die Beleuchtungslampe Folgendes umfasst:
eine Leuchtdiode (271);
eine Gleichrichterschaltung (24, 25), die konfiguriert ist, eine Wechselstromspannung gleichzurichten, die durch die Wechselrichterdrossel für eine Leucht-stofflampe zugeführt wird, und die gleichgerichtete Spannung der Leuchtdiode (271) zuzuführen; und
eine Spannungsdetektionsschaltung (33B), die konfiguriert ist, zu bewirken, dass kein Strom von der Wechselrichterdrossel für eine Leuchtstofflampe zu der Gleichrichterschaltung (24, 25) fließt, wenn eine Spannung, die durch die Wechselrichterdrossel für eine Leuchtstofflampe angelegt wird, kleiner als eine vorgegebene Spannung ist, und zu bewirken, dass der Strom von der Wechselrichterdrossel für eine Leuchtstofflampe zur Gleichrichterschaltung (24, 25) fließt, wenn die Spannung gleich der oder größer als die vorgegebene Spannung wird;
wobei die Spannungsdetektionsschaltung (33B) ein Gleichstromimpedanzelement (332) und eine Zener-Diode (331), die mit dem Gleichstromimpedanzelement (332) in Reihe geschaltet ist, enthält; und
wobei die Gleichrichterschaltung (24, 25) die gleichgerichtete Spannung an eine plusseitige Drahtverbindung und an eine minusseitige Drahtverbindung ausgibt,
**dadurch gekennzeichnet, dass**
die Zener-Diode (331), von der eine Kathode der Gleichrichterschaltung (24, 25) zugewandt ist, in die plusseitige Drahtverbindung eingefügt ist, und
das Gleichstromimpedanzelement (332) zwischen einer Anode der Zener-Diode (331) und der minusseitigen Drahtverbindung angeschlossen ist.

2. Beleuchtungslampe (2) nach Anspruch 1, wobei mehrere Gleichstromimpedanzelemente (333, 334) in Reihe geschaltet sind, wodurch sie eine Spannung der Anode der Zener-Diode (331) teilen.

3. Beleuchtungsvorrichtung (1), die Folgendes umfasst: die Beleuchtungslampe (2) nach einem der Ansprüche 1 bis 2; und
eine Beleuchtungsbefestigung (5), an der die Beleuchtungslampe (2) befestigt ist.

## Revendications

1. Lampe d'éclairage (2) adaptée pour être reliée à un ballast à changement de fréquence destiné à une lampe fluorescente, la lampe d'éclairage comprenant :
une diode électroluminescente (271) ;
un circuit redresseur (24, 25) configuré pour redresser une tension CA fournie par le ballast à changement de fréquence destiné à une lampe fluorescente, et pour fournir la tension redressée à la diode électroluminescente (271) ;
et
un circuit de détection de tension (33B) configuré pour provoquer la non-circulation d'un courant entre le ballast à changement de fréquence destiné à une lampe fluorescente et le circuit redresseur (24, 25) lorsqu'une tension appliquée par le ballast à changement de fréquence destiné à une lampe fluorescente est inférieure à une tension prédéterminée, et pour provoquer la circulation du courant entre le ballast à changement de fréquence destiné à une lampe fluorescente et le circuit redresseur (24, 25) lorsque la tension devient égale ou supérieure à la tension prédéterminée ;
dans laquelle le circuit de détection de tension (33B) comprend un élément d'impédance CC (332) et une diode Zener (331) reliée en série à l'élément d'impédance CC (332) ; et
dans lequel le circuit redresseur (24, 25) transmet la tension redressée à une connexion filaire côté plus et une connexion filaire côté moins,
**caractérisée en ce que** la diode Zener (331), dont une cathode est tournée vers le circuit redresseur (24, 25), est insérée dans la connexion filaire côté plus, et
l'élément d'impédance CC (332) est relié entre une anode de la diode Zener (331) et la connexion filaire côté moins.

2. Lampe d'éclairage (2) selon la revendication 1, dans laquelle plusieurs éléments d'impédance CC (333, 334) sont reliés en série, afin de diviser une tension de l'anode de la diode Zener (331).

3. Appareil d'éclairage (1) qui comprend : la lampe d'éclairage (2) selon l'une quelconque des revendications 1 à 2 ; et
un système d'éclairage (5) auquel la lampe d'éclairage (2) est reliée.
